# EUROPÄISCHE PATENTSCHRIFT

(11) **EP 2 028 384 B1**
(45) Veröffentlichungstag und Bekanntmachung des Hinweises auf die Patenterteilung: **06.11.2013**
(21) Anmeldenummer: 08014094.0
(22) Anmeldetag: 07.08.2008
(51) Int. Cl.: F16D 13/70

(54) **Anpressplatte für eine Reibungskupplung**
Pressure plate for a friction clutch
Plateau de pression pour un embrayage à friction

(30) Priorität: 18.08.2007 DE 102007039084; 31.07.2008 DE 102008040888
(43) Veröffentlichungstag der Anmeldung: 25.02.2009
(73) Patentinhaber: ZF Friedrichshafen AG, 88038 Friedrichshafen (DE)
(72) Erfinder: Berck, Rüdiger, 97241 Oberpleichfeld (DE)

(56) Entgegenhaltungen:
- DE-A1- 4 418 026
- DE-A1- 10 005 548
- DE-A1-102005 049 433
- DE-B3-102004 034 142
- FR-A1- 2 583 479

## Beschreibung

Die Erfindung betrifft eine Anpressplatte für eine Reibungskupplung, die einen sich radial erstreckenden, ringartig ausgebildeten Reibflächenbereich zum Zusammenwirken mit einem in radialer Richtung sich erstreckenden Reibbelag einer Kupplungsscheibe zur Übertragung eines Drehmomentes aufweist, wobei die drehfest und axial verlagerbar an einem Gehäuse eingebrachte Anpressplatte einer modulierbaren Drehmomentkennlinie folgend von einem ausgerückten in einem eingerückten Zustand überführbar ist.

Weiterhin betrifft die Erfindung eine Reibungskupplung mit einem Gehäuse, einer axial verlagerbar und drehfest am Gehäuse angeordneten Anpressplatte, die einen sich radial erstreckenden, ringartig ausgebildeten Reibflächenbereich zum Zusammenwirken mit einem in radialer Richtung sich erstreckenden Reibbelag einer Kupplungsscheibe aufweist, einer Kraftbeaufschlagungsanordnung um die Anpressplatte mit ihren Reibflächenbereich in Richtung einer Kupplungsscheibe zu beaufschlagen, wobei die Anpressplatte einer modulierbaren Drehmomentkennlinie folgend von einem ausgerückten in einem eingerückten Zustand überführbar ist.

Die Erfindung findet auch Anwendung in schaltbaren Kraftfahrzeuggetrieben mit einer Reibungskupplung, beinhaltent ein Gehäuse, eine axial verlagerbar und drehfest am Gehäuse angeordneten Anpressplatte, die einen sich radial erstreckenden, ringartig ausgebildeten Reibflächenbereich zum Zusammenwirken mit einem in radialer Richtung sich erstreckenden Reibbelag einer Kupplungsscheibe aufweist, eine Kraftbeaufschlagungsanordnung um die Anpressplatte mit ihren Reibflächenbereich in Richtung einer Kupplungsscheibe zu beaufschlagen, wobei die Anpressplatte einer modulierbaren Drehmomentkennlinie folgend von einem ausgerückten in einem eingerückten Zustand überführbar ist

Durch die Reibungswärme beim Einkuppeln, insbesondere bei Anfahrvorgängen schirmt sich der Reibflächenbereich konvex. Der radial äußere Reibflächenbereich schirmt sich axial weg von dem Reibbelag, der radial innere Reibflächenbereich der Anpressplatte schirmt sich axial in Richtung auf den Reibbelag zu. Die vormals gerade Reibfläche wölbt sich ähnlich einer Tellerfeder. Bei derartigen Anpressplatten für Reibungskupplungen wird bisher der Reibflächenbereich der Anpressplatte in konkaver Form ausgeführt, um dem wärmebedingten Schirmen der Anpressplatte entgegen zu wirken.

Aus der DE 10 2004 034 142 B3 ist eine Anpressplatte bekannt, bei der die Anpressplatte im Reibflächenbereich aus Aluminium und auf der Rückseite aus Grauguss hergestellt ist. Dabei soll die hohe Wärmeleitgeschwindigkeit von Aluminiumlegierungen und die hohe Wärmespeicherkapazität von Grauguss vorteilhaft kombiniert werden. Eine solche Ausführungsform ist von der Kostenbetrachtung nachteilig.

Aus der DE 100 31 598 A1 sind Ausführungen bekannt, die einer Schirmung der Anpressplatte entgegenwirken sollen. So ist beispielsweise die Anpressplatte in Umfangsrichtung in mehrere Segmente unterteilt. Auch hier ist die Herstellung mit Kostennachteilen verbunden.

Es ist Aufgabe der Erfindung eine Anpressplatte bereitzustellen, die auch unter hohem Wärmeeintrag eine sichere Übertragung des Drehmomentes bereitstellt und sich kostengünstig herstellen lässt.

Die Erfindung löst die Aufgabe, indem die Anpressplatte einen radial außen und axial in Richtung des Reibbelages über den Reibflächenbereich hinaus ausgebildeten Erstreckungsbereich aufweist, der ringartig ausgebildet ist.

Der Erstreckungsbereich radial außerhalb der Reibfläche führt zu einer Versteifung der Anpressplatte gegen Schirmen. Insbesondere bei Wärmeeinwirkung infolge Reibarbeit am Reibflächenbereich ergibt sich eine deutliche Verbesserung des Schirmverhaltens der Anpressplatte. Indem zumindest entweder der nach radial außen sich erstreckende oder der axial in Richtung des Reibbelages sich erstreckende Bereich ringartig ausgebildet ist, wird eine konvexe Schirmung der Anpressplatte unterdrückt und ins Gegensätzliche umgedreht. Die sich ausbildende konkave Schirmung wird insbesondere bei einer steifen Ausführung des Erstreckungsbereiches unterstützt. Dies führt zu einem besseren Verhalten schon zu Beginn eines Einkuppelvorganges. Die Sicherheitsreserven bei der Auslegung einer Reibungskupplung können geringer ausfallen. Auch können Anpressplatten in Doppelkupplungen, die bei Gangwechsel lange Schleifvorgänge aufweisen, durch die erfindungsgemäße Ausgestaltung mit solchen Anpressplatten einen hohen Wärmeeintrag aufweisen, ohne dass die Drehmomentübertragung durch starkes Schirmen bereits im Moment des Gangwechsels negativ beeinflusst wird.

Daher wird in weiterer erfindungsgemäßer Ausgestaltung vorgesehen, dass der Erstreckungsbereich als geschlossene Ringform ausgebildet ist.

Indem die Anpressplatte erfindungsgemäß über den Reibflächenbereich nach radial außen als geschlossene Ringfläche sich erstreckt wird deren Schirmung deutlich verhindert.

Die erfindungsgemäße Ausgestaltung der Anpressplatte sieht vor, dass diese radial außerhalb sich axial über den Reibflächenbereich hinaus als geschlossene Ringform erstreckt. Der sich hierbei bildende Erstreckungsbereich radial außerhalb des Reibflächenbereiches wird infolge des Wärmeeintrages indirekt erwärmt. Im ersten Zeitbereich mit Beginn des Wärmeeintrages an der Reibfläche wird auch durch die höhere Eigensteifigkeit der Anpressplatte die Schirmung deutlich verringert ausfallen. Versuche haben nun gezeigt, dass die vorgenannten erfindungsgemäßen Ausführungen mit Fortschreiten der Erwärmung zu einer gegensätzlichen Schirmung der Anpressplatte führen, Es findet demnach nicht nur eine geringere konvexe Schirmung des Reibflächenbereiches der Anpressplatte statt, sondern eine konkave Ausformung infolge des Wärmeeintrages. Dies ist insbesondere bei wiederholtem Wärmeeintrag wie beispielsweise dem Rangierbetrieb oder einem Anfahren am Berg von besonderem Vorteil. Mit zunehmender Erwärmung steigt infolge der konkaven Schirmung der mittlere Reibdurchmesser am Reibflächenbereich an und die Übertragungsfähigkeit erhöht sich.

Weiterhin ist vorgesehen, dass der Erstreckungsbereich zumindest bis an die axiale Dicke des Reibbelages im eingekuppelten Zustand diesen übergreift.

Besonders vorteilhaft ist es, wenn der Erstreckungsbereich sich in Axialrichtung im eingekuppelten Zustand nur insoweit über den Reibbelag hinweg erstreckt, als es der Dicke des Reibbelages in maximal verschlissenem Zustand entspricht.

Weiterhin ist vorgesehen, dass die Reibungskupplung eine Widerlageranordnung zur Abstützung der Anpresskraft der Anpressplatte bei Reibeingriff mit dem Reibbelag aufweist. Für übliche Reibungskupplungen kann auch vorgesehen sein, dass die Reibungskupplung eine Widerlageranordnung mit einem ringartig ausgebildeten Reibflächenbereich zum Reibeingriff mit einem Reibbelag einer Kupplungsscheibe aufweist. Hierbei kann die Widerlageranordnung durch ein Schwungrad oder Zweimassenschwungrad und/oder eine Zwischenplatte einer Mehrscheibenkupplung gebildet sein. Insbesondere wenn die Widerlageranordnung eine entsprechende axiale Hinterschneidung radial außerhalb des Reibflächenbereiches aufweist, kann vorgesehen sein, dass sich der Erstreckungsbereich der Anpressplatte zumindest teilweise über den Gegenreibflächenbereich der Widerlageranordnung im eingekuppelten Zustand hinaus in axialer Richtung erstreckt. Hierbei lassen sich besonders steife Anpressplatten erstellen, welche die durch die Erfindung erzielte Eigenschaft auch bei hohen Temperaturen aufweisen.

Eine weitere Ausgestaltung sieht vor, dass der Erstreckungsbereich nicht mit dem der Anpressplatte zugeordneten Reibflächenbereich des Reibbelages zusammenwirkt. Indem der Erstreckungsbereich nicht mit dem Reibbelag der Kupplungsscheibe in Reibeingriff steht, ist der Wärmeeintrag infolge Reibeingriff auf den Reibflächenbereich begrenzt.

Weiterhin ist vorgesehen, dass die Anpressplatte sich über den mit dem Reibbelag in Kontakt stehenden Reibflächenbereich hinaus nach radial innen erstreckt mit einem ringartig ausgebildeten Flansch. Durch den radial innen angeordneten Flansch wird die Neigung der Anpressplatte, infolge Wärmeeintrag an der Reibfläche eine konkave Form einzunehmen, erhöht. Besonders vorteilhaft wird dies erzielt durch die Ausbildung eines gegenüber dem Reibflächenbereich zurückspringenden Flansches, der radial innen an der Anpressplatte angeordnet ist.

Dies wird nochmals verstärkt, wenn der Flansch auf der dem Reibflächenbereich abgewandten Seite gegenüber dem Grundkörper der Anpressplatte hervorsteht. Hier zeigt sich deutlich, dass durch das gegenüber dem Grundkörper der Anpressplatte, also im Reibflächenbereich, axiale Hervorspringen auf der Rückseite der Anpressplatte, die Neigung der Anpressplatte infolge Wärmeeintrag an der Reibfläche eine konkave Form am Reibflächenbereich einzunehmen, unterstützt wird. Vorteilhaft kann hierbei vorgesehen sein, dass der Flansch auf der dem Reibflächenbereich abgewandten Seite sich nach radial außen in den Grundkörperbereich der Anpressplatte teilweise erstreckt. Im Allgemeinen reicht hier ein Bereich von ca. 20% der radialen Erstreckung des Reibflächenbereichs. In Einzelfällen kann jedoch auch 30-50% als sinnvoll sich erweisen. Insbesondere dann, wenn die Anpressplattenschneide zur Auflage der Membranfeder oder eines Hebelelementes bei einer Kupplung des Normall-Offen-Typs innerhalb der Überdeckung des Flansches mit dem Grundkörper ausgebildet ist, kann auch vorgesehen sein, dass als Auflage für die Membranfeder oder des Hebelringes an der Anpressplatte ein Rampenring einer Belagverschleißnachstellung vorgesehen sein.

Besonders geeignet für die Wirkung der Erfindung ist es, wenn die Anpressplatte im Reibflächenbereich von radial außen nach radial innen im Querschnitt sich vergrößert. Indem auf der dem Reibflächenbereich abgewandten Seite der Erstreckungsbereich zumindest bereichsweise axial sich weniger erstreckt als der Grundkörper der Anpressplatte wird die zur konkaven Schirmung des Reibflächenbereichs strebende Wirkung des Erstreckungsbereichs vorteilhaft verstärkt.

Besonders vorteilhaft wird diese vorgenannte Wirkung ebenfalls erzielt, wenn der Erstreckungsbereich auf der dem Reibflächenbereich abgewandten Seite eine nach radial außen abfallende Stufung gegenüber dem Grundkörper der Anpressplatte aufweist.

Die Wirkung der Erfindung lässt sich besonders gut erzielen, wenn die Anpressplatte aus Stahl hergestellt ist. Für Anwendungsfälle, in denen ein geringes Massenträgheitsmoment angestrebt wird, ist es vorteilhaft, wenn die Anpressplatte aus einer Aluminiumlegierung hergestellt ist. Alternativ kann auch vorgesehen sein, dass die Anpressplatte aus einer Titanlegierung hergestellt ist.

Um den Verschleiß am Reibflächenbereich gering zu halten, wird vorgeschlagen, dass der Reibflächenbereich beschichtet ist. Insbesondere bei einer Beschichtung mit Karbid lässt sich die Haltbarkeit gegenüber Abrieb deutlich steigern.

Besonders kostengünstig lässt sich die Anpressplatte herstellen, wenn sie aus einem Schmiedeteil hergestellt wird.

Alternativ kann insbesondere bei großen Stückzahlen vorgesehen sein, dass die Anpressplatte durch einen Kaltverformungsprozess (z.B. Fließpressen) hergestellt ist.

Die Steifigkeit der Anpressplatte wird deutlich erhöht, wenn sie einteilig ausgebildet ist.

Anhand der folgenden Figurenbeschreibung soll die Erfindung näher erläutert werden.

Es zeigt:
- Figur 1: eine Reibungskupplung mit einer erfindungsgemäßen Anpressplatte;
- Figur 2: ein Kurvendiagramm zur Erleuterung der Wirkung der Erfindung

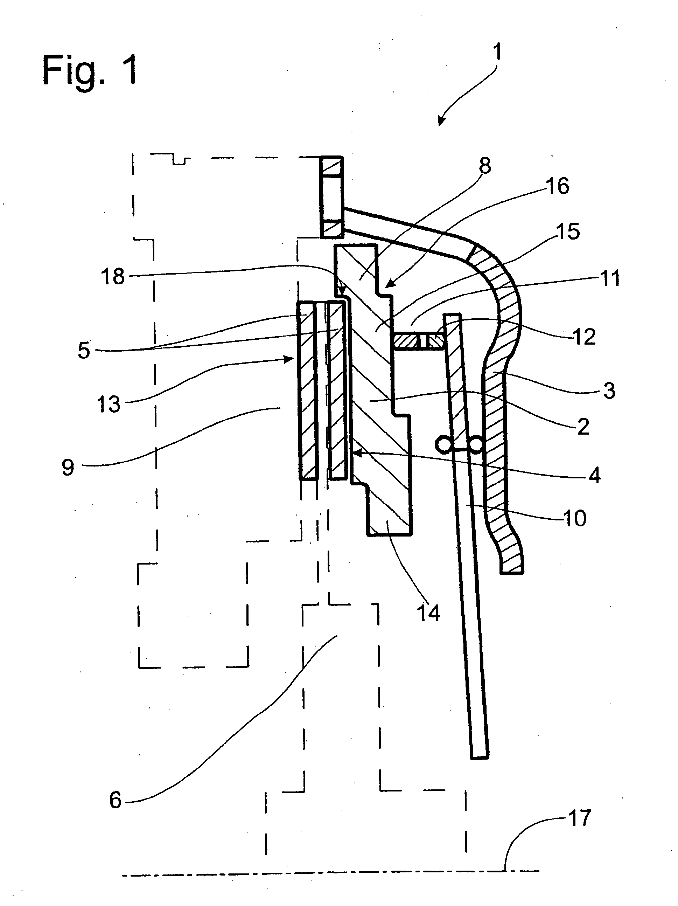

Aus dem Halbschnitt der Fig. 1 ist eine ausgekuppelte Reibungskupplung 1 ersichtlich, bei der die Anpressplatte 2 innerhalb des Gehäuses 3 drehfest, aber axial beweglich angebracht ist. Die Anpressplatte 2 steht mit ihrem Reibflächenbereich 4 im eingekuppelten Zustand der Reibungskupplung 1 in Reibkontakt mit dem zugewandten Reibbelag 5 der Kupplungsscheibe 6. Die Reibungskupplung 1 dreht sich um die mit der Kupplungsscheibe 6 gemeinsame Drehachse 17. Der abgewandte Reibbelag 5 steht dann mit einem Gegenreibflächenbereich 13 der Widerlageranordnung 9 in Reibkontakt. Die Widerlageranordnung 9 ist hier als Umriss eines Zweimassenschwungrades dargestellt, kann jedoch auch eine Zwischenscheibe einer Mehrscheibenkupplung oder ein Schwungrad einer Einzel- oder Doppelkupplung sein. Die Anpressplatte 2 wird durch eine Kraftbeaufschlagungsanordnung 10 beim Einkuppeln in Richtung Widerlageranordnung 9 mit einer Anpresskraft beaufschlagt. Die hier gezeigte Kraftbeaufschlagungsanordnung 10 wird durch eine Hebelanordnung gebildet, welche von außen mit einer Einkuppelkraft beaufschlagt wird und diese auf die Anpressplatte 2 überträgt. Alternativ kann die Kraftbeaufschlagungsanordnung 10 auch durch eine eine in Einkuppelrichtung gerichtete Anpresskraft erzeugende Membranfeder realisiert sein. Bei der dargestellten Anpressplatte 2 wird die Anpresskraft über eine den Reibbelagverschleiß automatisch kompensierende Verschleißnachstellung 11 mittels eines Rampenringes 12 von der Kraftbeaufschlagungsanordnung 10 aus aufgebracht.

Während eines Einkuppelvorganges entsteht aufgrund des Gleitens der Oberfläche des Reibbelages 5 über den Reibflächenbereich 4 und dem Gegenreibflächenbereich 13 entsprechende Reibungswärme, die diese Reibflächen aufheizt. Infolge dieses Wärmeeintrages in die Anpressplatte 2 haben bisherige Anpressplatten die Tendenz eine stark konvexe Schirmung am Reibflächenbereich 4 einzugehen.

Als konvexe Schirmung des Reibflächenbereiches 4 ist zu verstehen, dass der Reibflächenbereich 4 z.B. infolge Wärmeeintrags am Reibflächenbereich 4 beim Einkuppeln sich derart verformt, dass der dem Erstreckungsbereich 8 nahe Bereich des Reibflächenbereichs 4 sich vom Reibbelag 5 axial entfernt und der radial innen, nahe dem Flansch, befindliche Reibflächenbereich 4 sich in Richtung auf den Reibbelag 5 axial zu bewegt. Eine solche konvex geformte Anpressplatte 2 weist eine geringere Drehmomentübertragungsfähigkeit auf. Eine konkave Schirmung des Reibflächenbereichs 4 der Anpressplatte 2 ergibt sich, wenn die vorgenannte Verformung gegensätzlich ausfällt. Wenn also der Reibflächenbereich 4 radial außen axial sich in Richtung Reibbelag 5 verformt. Um die Drehmomentübertragungsfähigkeit entsprechend hoch zu halten sind heutige Anpressplatten oftmals von vornherein konkav geformt. Somit kann zumindest ein Teil der konvexen Schirmung neutralisiert werden.

Die Anpressplatte 2 weist in ihrem radial außen an dem Reibflächenbereich 4 anschließenden Erstreckungsbereich 8 einen in Richtung der Reibbeläge 5 axial über den Reibflächenbereich 4 hinaus ausgebildeten Übergriff 18 auf. Der Erstreckungsbereich 8 ist vorteilhaft als geschlossene Ringform einteilig mit dem Grundkörper 15 der Anpressplatte 2 ausgeformt.

Hierbei ist insbesondere der direkt an dem Grundkörper 15 der Anpressplatte 2 angrenzende Bereich des Erstreckungsbereichs 8 als geschlossene Ringform ausgebildet, wohingegen der radial oder axial entfernt liegende Bereich als Erstreckungsbereich 8 unter Umständen auch von der geschlossenen Ringform abweichen kann. Dies kann beispielsweise dann der Fall sein, wenn Ausnehmungen für Befestigungsmittel wie Schrauben oder Niete oder Werkzeuge notwendig sind. Da Gehäuse 3 und Anpressplatte 2 relativ zueinander drehfest angeordnet sind, kann es bei bestimmten Anwendungsfällen sein, dass ein erster Abschnitt des Erstreckungsbereiches 8 eine geschlossene Ringform und ein weiterer Abschnitt Unterbrechungen oder Ausnehmungen aufweist.

Besonders vorteilhaft gestaltet sich die Erfindung, wenn der Erstreckungsbereich 8 im Übergang zum Grundkörper 15 eine Stufung 16 auf der dem Reibflächenbereich 4 abgewandten Seite besitzt. Dies ergibt erfindungsgemäß eine Anpressplatte 2, die nach radial außen in Axialrichtung zum Reibflächenbereich gestuft ausgeführt ist.

Erfindungsgemäß ist hierbei die Anpressplatte 2 als geschlossene Ringform radial über den Reibflächenbereich 4 hinaus gestaltet. Durch die gestufte Ausführung in Axialrichtung des radial außerhalb des Reibflächenbereichs 4 ausgeformten Erstreckungsbereichs 8 wird die Verformung infolge Wärmeeinbringung über den Reibflächenbereich 4 erfindungsgemäß so beeinflusst, dass sich die Anpressplatte 2 am Reibflächenbereich 4 konkav ausbildet. Je nach Dimensionierung des Erstreckungsbereichs 8 kann die eine konkave Schirmung des Reibflächenbereichs 4 erzeugende Wirkung unterschiedlich ausgeprägt sein. So ist es auch machbar, dass der Reibflächenbereich 4 zuerst eine geringe konvexe Schirmung infolge Wärmeeintrag aufweist und erst mit zunehmender Erwärmung der Anpressplatte 2 der Reibflächenbereich 4 in die konkave Schirmung sich verformt.

Dies kann insbesondere bei Werkstoffen mit geringer Wärmeleitgeschwindigkeit auftreten. Auch kann vorgesehen sein, dass der Erstreckungsbereich 8 im Übergang zum Grundkörper 15 der Anpressplatte eine geringe Stufung 16 aufweist und die Außenkontur des Erstreckungsbereichs 8 nach radial außen in Axialrichtung in Richtung des Reibbelages 5 sich neigt. Gerade radial außen auf der dem Reibbelag 5 abgewandten Seite des Erstreckungsbereichs 8 kann somit die Außenkontur durch eine Abschrägung der Kontur der Getriebeglocke folgen.

Die Wirkung des Erstreckungsbereichs 8 wird dadurch verstärkt, dass radial außerhalb des Reibflächenbereichs 4 der Erstreckungsbereich 8 axial sich über den Reibflächenbereich 4 hinaus erstreckt. Durch diesen Übergriff 18 wird die eine konkave Schirmung erwirkende Ausdehnung im Erstreckungsbereich in ihrer Wirkung auf den Reibflächenbereich 4 größer.

Weiterhin weist die Anpressplatte 2 einteilig an ihrem radial inneren Bereich des Grundkörpers 15 anschließend einen nach radial innen erstreckenden Flansch 14 auf. Vorteilhafterweise ist dieser Flansch 14 gegenüber dem Reibflächenbereich 4 axial versetzt.

Es ergibt sich erfindungsgemäß eine Anpressplatte 2, deren Querschnitt zumindest auf der dem Reibflächenbereich zugewandten Axialseite eine gestufte Form aufweist derart, dass der radial außen befindliche Erstreckungsbereich 8 axial gegenüber dem Reibflächenbereich 4 hervorsteht. Vorteilhafterweise ist radial innen ein Flansch 14 vorgesehen, der axial gegenüber dem Reibflächenbereich 4 zurückspringt.

Durch den zum Reibbelag 5 größeren Axialabstand des Flansches 14 relativ zum Reibflächenbereich 4 wird die erfindungsgemäße Wirkung, eine konkave Verformung des Reibflächenbereichs 4 bei Erwärmung über den Reibflächenbereich 4 zu erzielen, unterstützt.

Auf der dem Reibflächenbereich 4 abgewandten Seite der Anpressplatte 2 kann vorteilhafterweise der Flansch 14 gegenüber dem Grundkörper 15 axial hervorstehen. Auch kann vorteilhafterweise vorgesehen sein, dass der Flansch 14, insofern er auf der abgewandten Seite hervorsteht, sich radial in den Grundkörper 15 erstreckt. Hierdurch wird insbesondere im radial inneren Bereich des Reibflächenbereichs 4 eine die konkave Form des Reibflächenbereichs 4 bedingte, durch den Erstreckungsbereich 8 hervorgerufene Verformung unterstützt.

Die Verformung des Reibflächenbereichs 4 infolge Wärmeeintragung über den Reibflächenbereich 4 ist kein statischer, sondern ein dynamischer Prozess, der durch die Temperaturdifferenz am Reibflächenbereich 4 gegenüber dem noch nicht erhitzten Bereich der Anpressplatte 2 hervorgerufen wird. Daher ergibt sich mit jedem Einkuppeln, insbesondere Einkuppelvorgänge mit lang schleifender Kupplung wie z.B. Anfahren eines beladenen Fahrzeuges am Berg, eine mehr oder weniger ausgeprägte Schirmung.

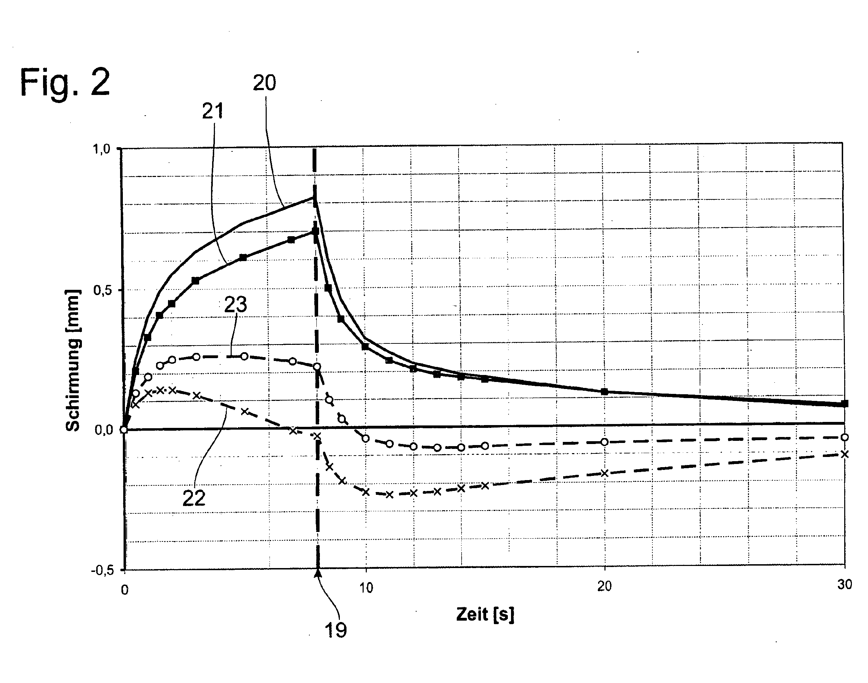

In der Fig. 2 sind für vier verschiedene Anpressplatten die Schirmverhalten bei schleifender Kupplung über der Zeitachse aufgetragen.

Auf der Ordinate ist die Schirmung der Anpressplatte ausgehend vom neutralen, nicht erhitzten Zustand aufgezeichnet. Auf der Abszisse ist die Zeitachse dargestellt. Die im Diagramm der Fig. 2 gezeigte oberste Kurve zeigt die Schirmung am Reibflächenbereich der Anpressplatte für eine konventionelle Anpressplatte der Größe 240/180 und ist der Einfachheit halber mit 20 gekennzeichnet.

Die zweite Kurve oben zeigt die Schirmung am Reibflächenbereich einer konventionellen Anpressplatte der Größe 220/152 und ist mit 21 gekennzeichnet. Beide vorgenannten Anpressplatten weisen nicht die erfindungsgemäße Ausgestaltung auf.

Die zweite Kurve von unten zeigt den Verlauf der Schirmung am Reibflächenbereich einer erfindungsgemäßen Anpressplatte der Vergleichsgröße 220/152 und ist mit 23 gekennzeichnet. Die letztgenannte Kurve wird verglichen mit der Kurve 21.

Die unterste Kurve im Diagram zeigt den Verlauf der Schirmung am Reibflächenbereich einer erfindungsgemäßen anpressplatte der Vergleichsgröße 240/180 und ist mit 22 gekennzeichnet.

Die senkrechte Linie bei 19 zeigt das Ende des Wärmeeintrages am Reibflächenbereich nach etwa 8 Sekunden an. Die Kurven der Schirmung verlaufen auf der Zeitachse über den Punkt 19 hinaus um das Verhalten der jeweiligen Anpressplatte auch im Zeitraum direkt danach aufzuzeigen.

Vom Zeitpunkt Null aus startend zeigt jede Anpressplatte zuerst eine Schirmung, wobei bereits zu Beginn deutlich wird, dass die beiden erfindungsgemäß ausgestellten Anpressplatten eine geringere Steigung und damit eine zeitlich langsamere Schirmung aufweisen.

Die beiden Kurven 21 und 20 verlaufen zumindest im ersten Zeitbereich der Wärmezufuhr ähnlich, um dann mit fortschreitender Wärmezufuhr bis zum Zeitpunkt 19 jeweils ihre maximale Schirmung am Reibflächenbereich aufzuweisen. Hierbei liegt die Schirmung entsprechend Kurve 20 bei etwa 0,8mm und bei Kurve 21 bei etwa 0,7mm. Ab dem Stopp der Wärmezufuhr zeigen die beiden Kurven 20 und 21 der beiden konventionellen Anpressplatten, dass die Schirmung allmählich wieder zurückgeht und sich asymptotisch dem Ausgangszustand annähert.

Aus der Kurve 23 für die erfindungsgemäß ausgeführte Anpressplatte der Vergleichsgröße 220/152 erkennt man, dass die Schirmung bereits während des Zeitraumes der Wärmezufuhr von einem Maximum sich wieder verringert und der Betrag der konvexen Schirmung deutlich geringer ausfällt. Nach Überschreiten des Zeitpunktes 19 sinkt die konvexe Schirmung schnell und führt nach etwa 1,5 Sekunden zu einer Umkehrung der Schirmung in die konkave Form. Die Drehmomentübertragungsfähigkeit ist ab diesem Moment höher als zum Startzeitpunkt.

Aus der Kurve 22 für die erfindungsgemäß ausgeführte Anpressplatte der Vergleichsgröße 240/180 zeigt sich die Wirkung der Erfindung noch deutlicher. Bereits nach ca. 2 Sekunden ist das Maximum der konvexen Schirmung am Reibflächenbereich der Anpressplatte erreicht und trotz weiterer Wärmezufuhr geht die konvexe Schirmung zurück um nach etwa 7 Sekunden in eine konkave Schirmung überzugehen. Mit Überschreiten des Zeitpunktes 19 neigt sich hier die Schirmung deutlich in konkaver Form weiter um nach einem konkaven Maximum langsam wieder asymptotisch sich dem Ausgangszustand anzunähern. Die beiden entsprechend der Erfindung ausgestalteten Anpressplatten entsprechend den Kurven 22 und 23 sind derart konstruktiv gegenüber den konventionellen Anpressplatten verändert, dass sie denselben Außendurchmesser und die identische Reibfläche aufweisen. Durch die erfindungsgemäße Ausgestaltung der Anpressplatte wird der mittlere Reibdurchmesser zwar geringer; es ist jedoch nicht mehr notwendig, eine für ungünstige Anfahrvorgänge mit entsprechender Übertragungssicherheit ausgelegte Reibungskupplung vorzuhalten. Vielmehr kann die Übertragungssicherheit deutlich gesenkt werden, so dass eine entsprechend der Erfindung gestaltete Reibungskupplung mit einer solchen Anpressplatte keine nennenswerte Bauraumvergrößerung nach sich zieht. Vielmehr ist es so, dass infolge der in eine konkave Schirmung strebenden Anpressplatte die Übertragungssicherheit gerade bei Missbrauch mit sehr hoher Temperaturbelastung noch steigt. Im eingekuppelten Zustand ist dann kein Zeitraum vorhanden, in dem die Reibungskupplung infolge hoher Erwärmung zum Rutschen neigt. Auch verkleinert sich bei einer solchen erfindungsgemäßen Reibungskupplung der Außendurchmesser der Kupplungsscheibe, und somit sinkt das Rotationsträgheitsmoment der Kupplungsscheibe. Dies ist gerade bei automatisierten Schaltgetrieben von Vorteil, da die Schaltzeiten verkürzt werden können. Daher ist die Erfindung gerade in automatisierten Doppelkupplungsgetrieben vorteilhaft einsetzbar. Insbesondere kann so die Belastung der Getriebeeingangswelle reduziert werden.

### Bezugszeichenliste

- 1: Reibungskupplung
- 2: Anpressplatte
- 3: Gehäuse
- 4: Reibflächenbereich der Anpressplatte
- 5: Reibbelag
- 6: Kupplungsscheibe
- 7: Belagfederung
- 8: Erstreckungsbereich
- 9: Widerlageranordnung
- 10: Kraftbeaufschlagungsanordnung
- 11: Verschleißnachstellung
- 12: Rampenring
- 13: Gegenreibflächenbereich an der Widerlageranordnung
- 14: Flansch (radial innerer Überstand)
- 15: Grundkörper der Anpressplatte
- 16: Stufung des Erstreckungsbereichs
- 17: Drehachse
- 18: Übergriff

## Patentansprüche

1. Anpressplatte (2) für eine Reibungskupplung, die einen sich radial erstreckenden, ringartig ausgebildeten Reibflächenbereich (4) zum Zusammenwirken mit einem in radialer Richtung sich erstreckenden Reibbelag (5) einer Kupplungsscheibe (6) zur Übertragung eines Drehmomentes aufweist, wobei die drehfest und axial verlagerbar an einem Gehäuse (3) eingebrachte Anpressplatte (2) einer modulierbarer Drehmomentkennlinie folgend von einem ausgerückten in einem eingerückten Zustand überführbar ist, und einen radial außen und axial in Richtung des Reibbelages (5) über den Reibflächenbereich (4) hinaus ausgebildeten Erstreckungsbereich (8) aufweist, **dadurch gekennzeichnet,**
**dass** der über den Reibflächenbereich (4) hinaus ausgebildete Erstreckungsbereich (8) ringartig ausgebildet ist.

2. Reibungskupplung (1) mit einem Gehäuse (3) und einer am Gehäuse (3) drehfest angeordneten und axial verlagerbaren Anpressplatte (2) nach Anspruch 1.

3. Schaltbares Kraftfahrzeuggetriebe mit einer Reibungskupplung (1) nach Anspruch 2.

4. Anpressplatte (2) nach einem der Ansprüche 1 bis 3,
**dadurch gekennzeichnet,**
**dass** der Erstreckungsbereich (8) als geschlossene Ringform ausgebildet ist.

5. Anpressplatte (2) nach einem der Ansprüche 1 bis 4,
**dadurch gekennzeichnet,**
**dass** der Erstreckungsbereich (8) zumindest bis an die axiale Dicke des Reibbelages (5) im eingekuppelten Zustand diesen übergreift.

6. Anpressplatte (2) nach einem der Ansprüche 1 bis 5,
**dadurch gekennzeichnet,**
**dass** die Reibungskupplung (1) eine Widerlageranordnung (9) zur Abstützung der Anpresskraft der Anpressplatte (2) bei Reibeingriff mit dem Reibbelag (5) aufweist.

7. Anpressplatte (2) nach einem der Ansprüche 1 bis 5,
**dadurch gekennzeichnet,**
**dass** die Reibungskupplung (1) eine Widerlageranordnung (9) mit einem ringartig ausgebildeten Reibflächenbereich (4) zum Reibeingriff mit einem Reibbelag (5) einer Kupplungsscheibe (6) aufweist.

8. Anpressplatte (2) nach einem der Ansprüche 6 oder 7,
**dadurch gekennzeichnet,**
**dass** die Widerlageranordnung (9) durch ein Schwungrad oder Zweimassenschwungrad und/oder einer Zwischenplatte einer Mehrscheibenkupplung gebildet wird.

9. Anpressplatte (2) nach einem der Ansprüche 7 oder 8,
**dadurch gekennzeichnet,**
**dass** der Erstreckungsbereich (8) der Anpressplatte (2) zumindest teilweise sich über den Gegenreibflächenbereich der Widerlageranordnung (9) im eingekuppelten Zustand in radialer Richtung erstreckt.

10. Anpressplatte (2) nach einem der Ansprüche 1 bis 9,
**dadurch gekennzeichnet,**
**dass** der Erstreckungsbereich (8) nicht mit dem der Anpressplatte (2) zugeordneten Reibflächeribereich (4) des Reibbelages zusammenwirkt.

11. Anpressplatte (2) nach einem der vorhergehenden Ansprüche,
**dadurch gekennzeichnet,**
**dass** die Anpressplatte (2) sich über den mit dem Reibbelag (5) in Kontakt stehenden Reibflächenbereich (4) hinaus nach radial innen erstreckt mit einem ringartig ausgebildeten Flansch(14).

12. Anpressplatte (2) nach einem der vorhergehenden Ansprüche,
**dadurch gekennzeichnet,**
**dass** die Anpressplatte (2) radial innen einen gegenüber dem Reibflächenberelch (4) zurückspringenden Flansch (14) aufweist.

13. Anpressplatte (2) nach einem der Ansprüche 11 oder 12,
**dadurch gekennzeichnet,**
**dass** der Flansch (14) auf der dem Reibflächenbereich (4) abgewandten Seite gegenüber dem Grundkörper (15) der Anpressplatte (2) hervorsteht.

14. Anpressplatte (2) nach Anspruch 13,
**dadurch gekennzeichnet,**
**dass** der Flansch (14) auf der dem Reibflächenbereich (4) abgewandten Seite sich nach radial außen in den Grundkörperbereich (15) der Anpressplatte (2) teilweise erstreckt.

15. Anpressplatte (2) nach einem der vorhergehenden Ansprüche,
**dadurch gekennzeichnet,**
**dass** die Anpressplatte (2) im Reibflächenbereich (4) von radial außen nach radial innen im Querschnitt sich vergrößert.

16. Anpressplatte (2) nach einem der vorhergehenden Ansprüche,
**dadurch gekennzeichnet,**
**dass** der Erstreckungsbereich (8) auf der dem Reibflächenbereich (4) abgewandten Seite gegenüber dem Grundkörper (15) zumindest teilweise zurückspringt.

17. Anpressplatte (2) nach einem der vorhergehenden Ansprüche,
**dadurch gekennzeichnet,**
**dass** der Erstreckungsbereich (8) auf der dem Reibflächenbereich (4) abgewandten Seite nach radial außen eine Stufung (16) gegenüber dem Grundkörper (16) der Anpressplatte (2) aufweist.

18. Anpressplatte (2) nach einem der vorhergehenden Ansprüche,
**dadurch gekennzeichnet,**
**dass** die Anpressplatte (2) aus Stahl hergestellt ist.

19. Anpressplatte (2) nach einem der vorhergehenden Ansprüche,
**dadurch gekennzeichnet,**
**dass** die Anpressplatte (2) aus einer Aluminiumlegierung hergestellt ist.

20. Anpressplatte (2) nach einem der vorhergehenden Ansprüche,
**dadurch gekennzeichnet,**
**dass** die Anpressplatte (2) aus einer Titanlegierung hergestellt ist.

21. Anpressplatte (2) nach einem der vorhergehenden Ansprüche,
**dadurch gekennzeichnet,**
**dass** der Reibflächenbereich (4) beschichtet ist.

22. Anpressplatte (2) nach einem der vorhergehenden Ansprüche,
**dadurch gekennzeichnet,**
**dass** die Anpressplatte (2) aus einem Schmiedeteil hergestellt ist,

23. Anpressplatte (2) nach einem der vorhergehenden Ansprüche,
**dadurch gekennzeichnet,**
**dass** die Anpressplatte (2) durch einen Kaltverformungsprozess (z.B. Fließpressen hergestellt ist.

24. Anpressplatte (2) nach einem der vorhergehenden Ansprüche,
**dadurch gekennzeichnet,**
**dass** die Anpressplatte (2) einteilig ausgebildet ist.

## Claims

1. Pressure plate (2) for a friction clutch, which has a radially extending friction-surface region (4) of ring-like design for cooperation with a radially extending friction lining (5) of a clutch disc (6) for the transmission of a torque, the pressure plate (2), introduced fixedly in terms of rotation and axially displaceably on a housing (3), being transferable, following a modulatable torque characteristic curve, from a disengaged state into an engaged state, and has a region of extent (8) formed radially on the outside and axially beyond the friction-surface region (4) in the direction of the friction lining (5), **characterized in that** the region of extent (8) formed beyond the friction-surface region (4) is of ring-like design.

2. Friction clutch (1) with a housing (3), and with a pressure plate (2) which is arranged fixedly in terms of rotation and axially displaceably on the housing (3) according to Claim 1.

3. Shiftable motor vehicle transmission with a friction clutch (1) according to Claim 2.

4. Pressure plate (2) according to one of Claims 1 to 3, **characterized in that** the region of extent (8) is designed as a closed ring shape.

5. Pressure plate (2) according to one of Claims 1 to 4, **characterized in that**, in the coupled state, the region of extent (8) engages over the friction lining (5) at least as far as the axial thickness of the latter.

6. Pressure plate (2) according to one of Claims 1 to 5, **characterized in that** the friction clutch (1) has an abutment arrangement (9) for supporting the pressure force of the pressure plate (2) during frictional engagement with the friction lining (5).

7. Pressure plate (2) according to one of Claims 1 to 5, **characterized in that** the friction clutch (1) has an abutment arrangement (9) with a friction-surface region (4) of ring-like design for frictional engagement with a friction lining (5) of a clutch disc (6).

8. Pressure plate (2) according to either one of Claims 6 or 7, **characterized in that** the abutment arrangement (9) is formed by a flywheel or two-mass flywheel and/or an intermediate plate of a multiple-disc clutch.

9. Pressure plate (2) according to either one of Claims 7 or 8, **characterized in that**, in the coupled state, the range of extent (8) of the pressure plate (2) extends in the radial direction at least partially over the friction-countersurface region of the abutment arrangement (9).

10. Pressure plate (2) according to one of Claims 1 to 9, **characterized in that** the region of extent (8) does not cooperate with the friction-surface region (4), assigned to the pressure plate (2), of the friction lining.

11. Pressure plate (2) according to one of the preceding claims, **characterized in that** the pressure plate (2) extends radially inwards with a flange (14) of ring-like design beyond the friction-surface region (4) which is in contact with the friction lining (5).

12. Pressure plate (2) according to one of the preceding claims, **characterized in that** the pressure plate (2) has radially on the inside a flange (14) which is set back with respect to the friction-surface region (4).

13. Pressure plate (2) according to either one of Claims 11 or 12, **characterized in that** the flange (14) projects with respect to the basic body (15) of the pressure plate (2) on the side facing away from the friction-surface region (4).

14. Pressure plate (2) according to Claim 13, **characterized in that** the flange (14) partially extends radially outwards into the basic-body region (15) of the pressure plate (2) on the side facing away from the friction-surface region (4).

15. Pressure plate (2) according to one of the preceding claims, **characterized in that** the pressure plate (2) is enlarged in cross section radially from the outside to radially on the inside in the friction-surface region (4).

16. Pressure plate (2) according to one of the preceding claims, **characterized in that** the region of extent (8) is at least partially set back with respect to the basic body (15) on the side facing away from the friction-surface region (4).

17. Pressure plate (2) according to one of the preceding claims, **characterized in that** the region of extent (8) has a step (16) with respect to the basic body (15) of the pressure plate (2) radially outwards on the side facing away from the friction-surface region (4).

18. Pressure plate (2) according to one of the preceding claims, **characterized in that** the pressure plate (2) is produced from steel.

19. Pressure plate (2) according to one of the preceding claims, **characterized in that** the pressure plate (2) is produced from an aluminium alloy.

20. Pressure plate (2) according to one of the preceding claims, **characterized in that** the pressure plate (2) is produced from a titanium alloy.

21. Pressure plate (2) according to one of the preceding claims, **characterized in that** the friction-surface region (4) is coated.

22. Pressure plate (2) according to one of the preceding claims, **characterized in that** the pressure plate (2) is produced from a forging.

23. Pressure plate (2) according to one of the preceding claims, **characterized in that** the pressure plate (2) is produced by means of a cold-forming process (for example, extrusion).

24. Pressure plate (2) according to one of the preceding claims, **characterized in that** the pressure plate (2) is formed as one part.

## Revendications

1. Plateau de pression (2) pour un embrayage à friction, qui présente une région de surface de friction (4) réalisée sous forme annulaire et s'étendant radialement, destinée à coopérer avec une garniture de friction (5), s'étendant dans la direction radiale, d'un disque d'embrayage (6) pour transférer un couple, le plateau de pression (2) monté de manière solidaire en rotation et déplaçable axialement sur un boîtier (3) pouvant être transféré, en suivant une ligne de couple caractéristique modulable, d'un état débrayé à un état embrayé, et présentant une région d'étendue (8) réalisée radialement à l'extérieur et axialement dans la direction de la garniture de friction (5) au-delà de la région de surface de friction (4),
**caractérisé en ce que**
la région d'étendue (8) réalisée au-delà de la région de surface de friction (4) est réalisée sous forme annulaire.

2. Embrayage à friction (1) comprenant un boîtier (3) et un plateau de pression (2) disposé de manière solidaire en rotation et déplaçable axialement sur le boîtier (3), selon la revendication 1.

3. Transmission de véhicule automobile commutable comprenant un embrayage à friction (1) selon la revendication 2.

4. Plateau de pression (2) selon l'une quelconque des revendications 1 à 3,
**caractérisé en ce que**
la région d'étendue (8) est réalisée sous forme annulaire fermée.

5. Plateau de pression (2) selon l'une quelconque des revendications 1 à 4,
**caractérisé en ce que**
la région d'étendue (8) vient en prise au moins jusqu'à l'épaisseur axiale de la garniture de friction (5) par-dessus celle-ci dans l'état accouplé.

6. Plateau de pression (2) selon l'une quelconque des revendications 1 à 5,
**caractérisé en ce que**
l'embrayage à friction (1) présente un agencement de butée (9) pour supporter la force de pression du plateau de pression (2) lors de l'engagement par friction avec la garniture de friction (5).

7. Plateau de pression (2) selon l'une quelconque des revendications 1 à 5,
**caractérisé en ce que**
l'embrayage à friction (1) présente un agencement de butée (9) avec une région de surface de friction (4) réalisée sous forme annulaire pour l'engagement par friction avec une garniture de friction (5) d'un disque d'embrayage (6).

8. Plateau de pression (2) selon l'une quelconque des revendications 6 ou 7,
**caractérisé en ce que**
l'agencement de butée (9) est formé par un volant d'inertie ou un volant d'inertie à deux masses et/ou un plateau intermédiaire d'un embrayage multidisques.

9. Plateau de pression (2) selon l'une quelconque des revendications 7 ou 8,
**caractérisé en ce que**
la région d'étendue (8) du plateau de pression (2) s'étend dans la direction radiale au moins en partie sur la région de surface de friction conjuguée de l'agencement de butée (9) dans l'état accouplé.

10. Plateau de pression (2) selon l'une quelconque des revendications 1 à 9,
**caractérisé en ce que**
la région d'étendue (8) ne coopère pas avec la région de surface de friction (4) de la garniture de friction associée au plateau de pression (2).

11. Plateau de pression (2) selon l'une quelconque des revendications précédentes,
**caractérisé en ce que**
le plateau de pression (2) s'étend radialement vers l'intérieur au-delà de la région de surface de friction (4) en contact avec la garniture de friction (5) avec une bride (14) réalisée sous forme annulaire.

12. Plateau de pression (2) selon l'une quelconque des revendications précédentes,
**caractérisé en ce que**
le plateau de pression (2) présente, radialement à l'intérieur, une bride (14) en retrait par rapport à la région de surface de friction (4).

13. Plateau de pression (2) selon l'une quelconque des revendications 11 ou 12,
**caractérisé en ce que**
la bride (14) fait saillie par rapport au corps de base (15) du plateau de pression (2) du côté opposé à la région de surface de friction (4).

14. Plateau de pression (2) selon la revendication 13, **caractérisé en ce que**
la bride (14) s'étend en partie radialement vers l'extérieur dans la région de corps de base (15) du plateau de pression (2) du côté opposé à la région de surface de friction (4).

15. Plateau de pression (2) selon l'une quelconque des revendications précédentes,
**caractérisé en ce que**
le plateau de pression (2) a une section transversale augmentant depuis radialement à l'extérieur jusqu'à radialement à l'intérieur dans la région de surface de friction (4).

16. Plateau de pression (2) selon l'une quelconque des revendications précédentes,
**caractérisé en ce que**
la région d'étendue (8) est au moins en partie en retrait par rapport au corps de base (15) du côté opposé à la région de surface de friction (4).

17. Plateau de pression (2) selon l'une quelconque des revendications précédentes,
**caractérisé en ce que**
la région d'étendue (8) présente, du côté opposé à la région de surface de friction (4), radialement vers l'extérieur, un gradin (16) par rapport au corps de base (15) du plateau de pression (2).

18. Plateau de pression (2) selon l'une quelconque des revendications précédentes,
**caractérisé en ce que**
le plateau de pression (2) est fabriqué en acier.

19. Plateau de pression (2) selon l'une quelconque des revendications précédentes,
**caractérisé en ce que**
le plateau de pression (2) est fabriqué en un alliage d'aluminium.

20. Plateau de pression (2) selon l'une quelconque des revendications précédentes,
**caractérisé en ce que**
le plateau de pression (2) est fabriqué en un alliage de titane.

21. Plateau de pression (2) selon l'une quelconque des revendications précédentes,
**caractérisé en ce que**
la région de surface de friction (4) est revêtue.

22. Plateau de pression (2) selon l'une quelconque des revendications précédentes,
**caractérisé en ce que**
le plateau de pression (2) est fabriqué à partir d'une pièce forgée.

23. Plateau de pression (2) selon l'une quelconque des revendications précédentes,
**caractérisé en ce que**
le plateau de pression (2) est fabriqué par un processus de façonnage à froid (par exemple par extrusion).

24. Plateau de pression (2) selon l'une quelconque des revendications précédentes,
**caractérisé en ce que**
le plateau de pression (2) est réalisé d'une seule pièce.
